(19) Europäisches Patentamt / European Patent Office / Office européen des brevets

(11) **EP 1 708 862 B1**

(12) **FASCICULE DE BREVET EUROPEEN**

(45) Date de publication et mention
de la délivrance du brevet:
**12.03.2014 Bulletin 2014/11**

(51) Int Cl.:
***B29C 31/04*** *(2006.01)*    ***B29C 31/06*** *(2006.01)*
***B29C 47/20*** *(2006.01)*

(21) Numéro de dépôt: **05702672.6**

(22) Date de dépôt: **14.01.2005**

(86) Numéro de dépôt international:
**PCT/IB2005/050162**

(87) Numéro de publication internationale:
**WO 2005/072051 (11.08.2005 Gazette 2005/32)**

(54) **SYSTEME DE DOSAGE DE MATIERE PLASTIQUE POUR DISPOSITIF DE PRODUCTION D' ARTICLES EN MATIERE PLASTIQUE**

KUNSTSTOFFMATERIALDOSIERSYSTEM FÜR
KUNSTSTOFFARTIKELHERSTELLUNGSVORRICHTUNG

PLASTIC MATERIAL METERING SYSTEM FOR PLASTIC ARTICLES MANUFACTURING DEVICE

(84) Etats contractants désignés:
**AT BE BG CH CY CZ DE DK EE ES FI FR GB GR
HU IE IS IT LI LT LU MC NL PL PT RO SE SI SK TR**

(30) Priorité: **29.01.2004  CH 1292004**

(43) Date de publication de la demande:
**11.10.2006  Bulletin 2006/41**

(73) Titulaire: **Aisapack Holding SA
1896 Vouvry (CH)**

(72) Inventeur: **HANOT, Dominique,
Aisapack Holding S.A.
CH-1896 Vouvry (CH)**

(74) Mandataire: **Grosfillier, Philippe
ANDRE ROLAND SA
Chemin des Charmettes 9
P.O. Box 5107
1002 Lausanne (CH)**

(56) Documents cités:
| | |
|---|---|
| WO-A-2004/026556 | FR-A- 1 601 290 |
| FR-A- 2 299 957 | GB-A- 1 199 445 |
| US-A- 3 386 132 | US-A- 4 444 702 |
| US-A- 4 959 001 | US-A- 5 256 051 |
| US-A- 5 281 384 | US-A- 5 645 873 |

• PATENT ABSTRACTS OF JAPAN vol. 1995, no. 05, 30 juin 1995 (1995-06-30) & JP 07 040400 A (MITSUBISHI MATERIALS CORP), 10 février 1995 (1995-02-10)
• PATENT ABSTRACTS OF JAPAN vol. 1996, no. 02, 29 février 1996 (1996-02-29) & JP 07 266379 A (MEIKI CO LTD), 17 octobre 1995 (1995-10-17)

EP 1 708 862 B1

**Description**

Domaine de l'invention

La présente invention se situe dans le domaine des systèmes de dosage de matière plastique incorporés dans des dispositifs de production d'articles en matière plastique.

Etat de la technique

De tels systèmes de dosage sont divulgués dans les documents brevets suivants : US 4 943 405 (AISA), US 4 352 775 (Karl Mägerle) et WO 03/047823 (SACMI).

Le système de dosage est intégré sur une machine de production de tubes, p.ex. dentifrices ou cosmétiques. Une unité de dosage dépose dans un moule une quantité exacte de plastique nécessaire au moulage de l'épaule (partie conique et orifice du tube). Par un procédé de compression-molding le plus souvent, l'épaule est formée.

Le système de dosage comprend un conduit d'arrivée de matière plastique, les doses de matière plastique étant obtenues par fermeture du conduit de matière plastique.

Le brevet US 6 045 736 (AISA) décrit une unité de dosage qui comprend une cavité communiquant avec un conduit d'arrivée de matière, le fond de la cavité comportant un orifice de sortie de matière qui peut être fermé au moyen d'une soupape coulissante en forme de tige.

Les systèmes de dosage actuels présentent cependant un certain nombre d'inconvénients.

Dans US 6 045 736 par exemple, à cause de l'asymétrie du conduit d'arrivée par rapport à la cavité, la répartition de la matière autour de la soupape n'est pas homogène, ce qui entraîne la production de doses de matière asymétriques.

De manière plus générale, les doses obtenues avec les systèmes actuels ont toujours une forme plus ou moins asymétrique et variable en masse ou en volume.

Le document JP-A-0740 400 décrit une unité de dosage selon le préambule de la revendication 1.

Résumé de l'invention

La présente invention présente notamment l'avantage de résoudre les problèmes précités.

Elle concerne un système tel que défini à la revendication 1 et une méthode d'utilisation du système telle que définie à la revendication 11.

Le système selon l'invention permet de réaliser des doses de matière plastique dont la masse est précise et la forme régulière dès les premiers dosages.

De préférence, le système de dosage est constitué d'une extrudeuse, d'un canal d'amenée de la matière plastifiée, d'un accumulateur et d'un bloc de dosage de une ou plusieurs buses.

Si le système comporte plusieurs buses, chacune peut être actionnée indépendamment des autres, elles peuvent être réglées pour délivrer une quantité de matière égale ou différente.

L'invention sera décrite ci-dessous de manière plus détaillée au moyen d'un mode de réalisation non-limitatif.

Brève description des figures

La figure 1 présente une unité de dosage en position de repos

La figure 2 illustre l'ouverture de la soupape

La figure 3 illustre l'écoulement d'une dose à travers l'orifice de sortie

La figure 4 illustre la formation d'une dose à l'extérieur du bloc

La figure 5 montre une vue agrandie de l'environnement de la cavité de dosage

La figure 6 présente la position purge

La figure 7 présente un premier type d'accumulateur (vue de côté)

La figure 8 présente un premier type d'accumulateur (vue de dessus)

La figure 9 présente un deuxième type d'accumulateur avec une variante de fixation de l'accumulateur à l'unité de dosage.

La figure 10 présente une unité de dosage en position de repos

La figure 11 illustre l'ouverture de la soupape

La figure 12 illustre l'écoulement d'une dose à travers l'orifice de sortie

La figure 13 illustre la formation d'une dose à l'extérieur du bloc

La figure 14 montre une vue agrandie de l'environnement de la cavité de dosage

La figure 15 présente la position purge

La figure 16 présente une unité de dosage en position de repos

La figure 17 illustre l'ouverture de la soupape

La figure 18 illustre l'écoulement d'une dose à travers l'orifice de sortie

La figure 19 illustre la formation d'une dose à l'extérieur du bloc

La figure 20 montre une vue agrandie de l'environnement de la cavité de dosage

La figure 21 présente la position purge

Liste des références numériques

1. Unité de dosage
2. Bloc
3. Soupape

4. Cavité de dosage

5. Orifice de sortie de matière

6. Couvercle

7. Piston

8. Passage piston

9. Grille

10. Conduit d'arrivée de matière

11. Butée

12. Gorge hélicoïdale

13. Alésage conique du piston

14. Gorge rectiligne

15. Accumulateur (1er type vue de côté)

16. Accumulateur (1e type vue de dessus)

17. Conduit

18. Sortie accumulateur

19. Vis d'extrusion

20. Piston accumulateur

21. 1 ere sortie accumulateur

22. 2e sortie accumulateur

23. 1er conduit flexible

24. 2e conduit flexible

25. Siège de soupape

26. Unité de dosage

27. Bloc

28. Corps de soupape

29. Douille pour soupape

30. Piston

31. Siège de soupape

32. Grille

33. Couvercle de soufflage

34. Canal d'arrivée matière A

35. Canal d'arrivée de matière B

36. rainure hélicoïdale (sur soupape)

37. Passage matière B sur soupape

38. Conduit matière B (sur piston)

39. Rainure hélicoïdale (sur piston)

40. Cône

41. Orifice de sortie matière

42. Cavité matière B

43. Cavité matière A

44. Orifice de sortie matière B

45. butée

46. Passage matière A pour couche interne

47. Passage matière A sur piston pour couche externe

48. couche externe de la dose (matière A)

49. couche médiane de la dose (matière B)

50. couche interne de la dose (matière A)

51. entretoise pour purge

52. embout de soupape

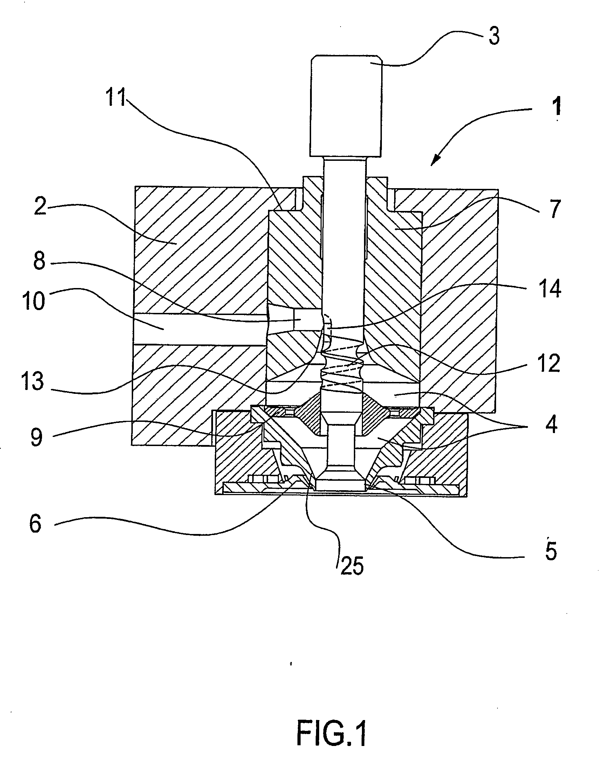

La buse de dosage représentée à la figure **1** est constituée d'un bloc **2,** d'une soupape en forme de tige **3,** d'un siège de soupape **25,** d'une cavité de dosage **4,** d'une grille **9,** d'un piston **7** et d'un couvercle de soufflage **6.**

En position repos (fig. 1), la cavité **4** est alimentée par la matière plastique au travers du bloc **2** et du piston **7,** le passage **8** dans le piston **7** est ouvert et l'orifice de sortie **5** est fermé. Le piston **7** est en position haute en butée **11** contre le bloc **2.**

Lors du cycle de dosage, la soupape **3** effectue une course linéaire engendrée par un actionneur (non illustré) dont la course est réglable (p.ex. vérin pneumatique).

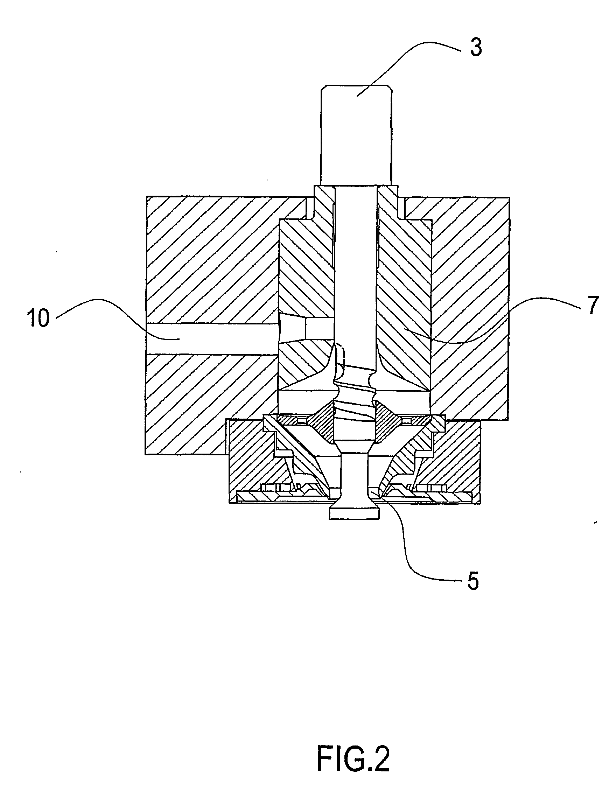

Dans la situation illustrée à la figure 2, le passage du piston **8** se ferme et l'orifice de sortie de matière **5** s'ouvre. La cavité **4** se retrouve alors isolée de l'alimentation de matière.

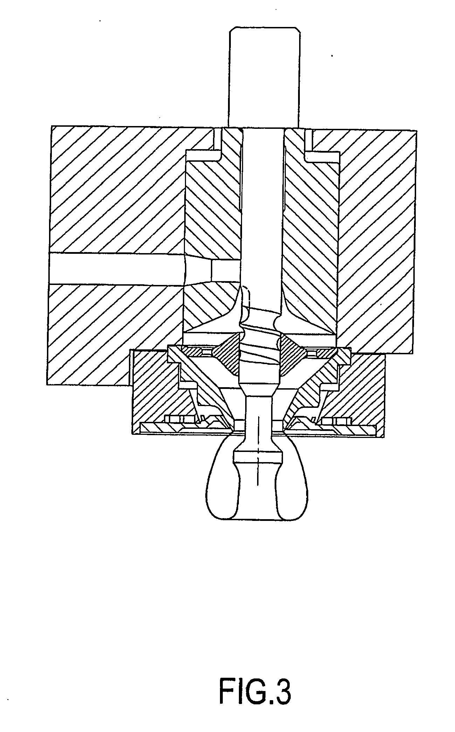

Dans la situation illustrée à la figure 3, la soupape **3** continue sa course et vient en butée avec la face supérieure du piston **7** qu'elle entraîne également jusqu'à l'arrêt de l'actionneur. Le piston **7** chasse de la cavité **4** un volume de matière proportionnel à sa course, cette matière s'écoule par l'orifice de sortie de matière **5.**

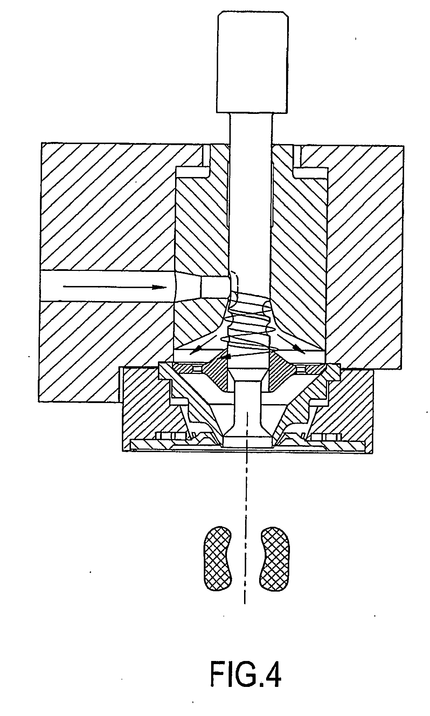

L'actionneur entraîne ensuite la soupape **3** en sens inverse ce qui provoque la fermeture de l'orifice de sortie **5** et l'ouverture du passage dans le piston **8** (Fig. 4). Simultanément à la fermeture de l'orifice de sortie **5,** la dose de matière plastique est décollée par soufflage. La matière sous pression dans le conduit d'arrivée de matière **10** traverse le passage **8** et repousse le piston **7** contre la butée **11,** ce qui a pour effet de remplir la cavité de dosage **4** et de remettre l'unité de dosage en position de repos telle qu'illustrée à la figure 1.

La pression de la matière dans le conduit d'arrivée de matière **10** doit être suffisante pour que le piston **7** soit remonté avant le prochain cycle de dosage. Ce système de dosage n'a pas besoin d'une pression dans la matière très précise, et tolère des variations de celle-ci.

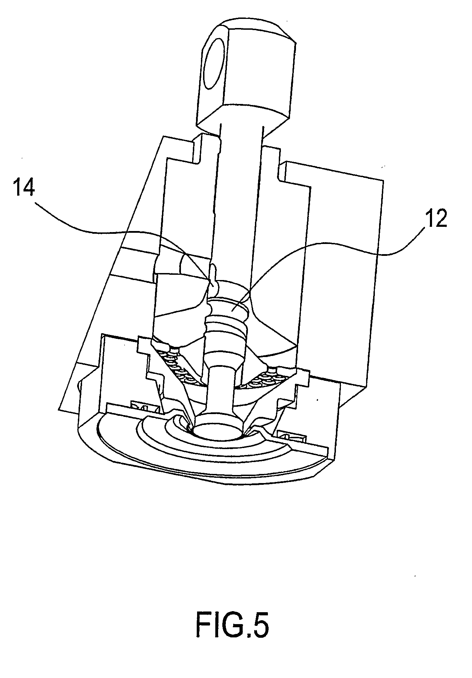

On décrira ci-après de manière plus détaillée l'environnement du passage **8** dans le piston **7** (voir fig.5).

La matière venant du passage **8** arrive sur la tige cylindrique de la soupape **8** qui comporte une rainure de section arrondie **12** composée de deux portions successives : d'abord une partie droite puis une hélice à profondeur décroissante. L'alésage **13** correspondant du piston **7** est conique.

Cet arrangement du passage de la matière permet une répartition circulaire autour du siège **25** de la soupape **3.** L'écoulement passe progressivement de la rainure **12** au cône **13.** L'arrivée de la matière au centre de la cavité **4** permet d'obtenir une dose de matière en sortie qui est bien symétrique.

Ce système permet un changement de couleur plus facile.

La grille **9** force l'écoulement de la matière sur toute la périphérie de la soupape **3.** Elle équilibre également la forme et la répartition de la matière de la dose. La grille **9** est facilement démontable, selon le type de matière, il est possible monter ou non cette pièce.

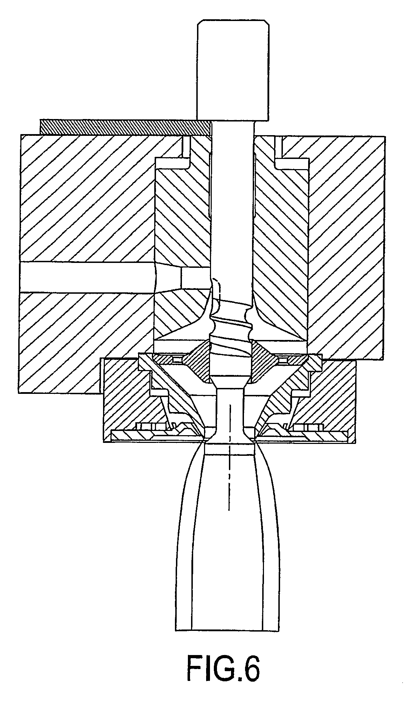

Position de purge (figure 6) :

En plaçant une entretoise entre la soupape et le piston puis en actionnant la l'ouverture de la buse, le passage **8** du piston et l'orifice de sortie **5** sont ouverts, ce qui permet à la matière plastique de s'écouler en continu.

Le débit de matière en sortie de buse est discontinu, et l'actionnement de la ou des buses est conditionné par la présence de corps de tube. Afin de remédier à cette situation, on utilise de préférence un accumulateur de matière.

Plus précisément, l'accumulateur a plusieurs fonctions :

1. Maintien d'une pression constante dans le conduit d'arrivée de matière **10** pour actionner la remontée du piston de dosage.

2. Absorption d'une partie de la discontinuité du dosage et transmission à la vis d'extrusion **19** d'une vitesse sensiblement constante.(variation sinusoïdale).

3. Lorsque que l'orifice de sortie **5** est fermé, accumulation d'une quantité de plastique sans arrêter la vis d'extrusion **19.**

4. Sa position régule la vitesse de la vis d'extrusion : si la quantité de matière accumulée diminue, la vitesse de la vis **19** augmente et inversement.

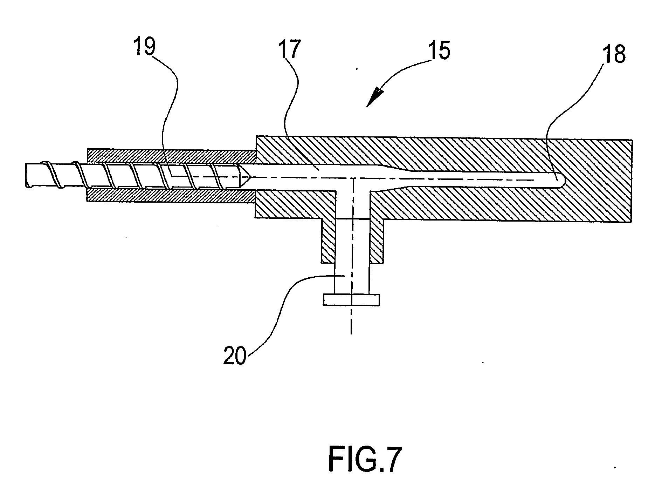

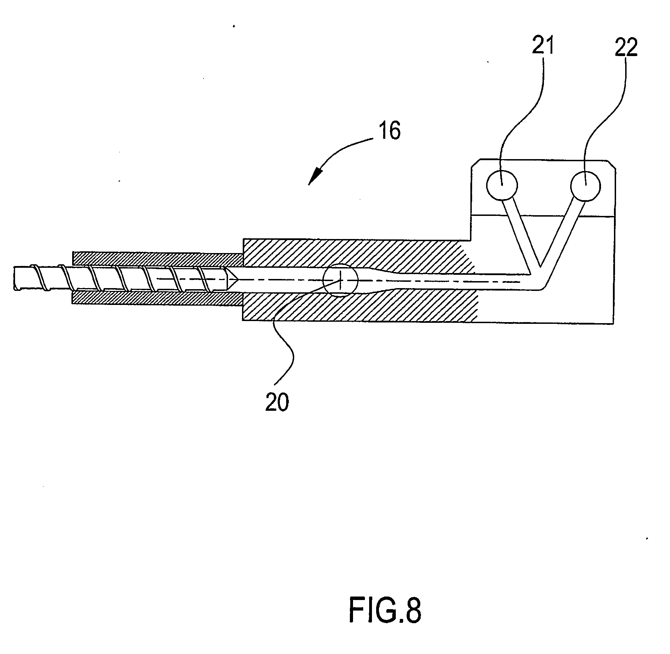

Un premier type d'accumulateur **15** pouvant être utilisé dans le cadre de la présente invention est illustré à la figure 7 et 8. Un piston **20** de régulation se déplace dans un cylindre disposé transversalement par rapport au conduit **17** de l'accumulateur. Le piston **20** peut être disposé de différentes manières sur le conduit **17** entre l'extrémité de la vis d'extrusion **19** et le bloc **2.** Le piston **20** peut également avoir différentes formes à son extrémité en contact avec la matière. La pression dans la matière plastique est générée par un vérin pneumatique simple-effet qui transmet au piston une force constante. Seule la pression d'air est contrôlée.

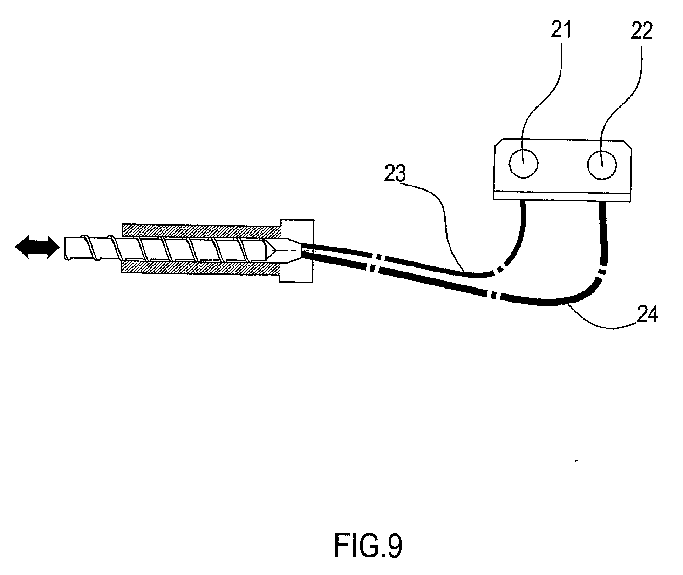

La figure 9 illustre un autre type d'accumulateur **16** qui se caractérise par le déplacement axial de la vis d'extrusion **19.** La pression dans la matière plastique est générée par un vérin pneumatique simple-effet qui transmet à la vis d'extrusion **19** une force constante. Seule la pression d'air est contrôlée. Il est également possible de faire varier la pression durant le cycle.

Cette deuxième variante offre l'avantage de ne pas créer de zone morte pour l'écoulement de la matière, il n'y a pas de stagnation et le changement de matière ou de couleur est facilité.

Dans le cas ou la fonction accumulateur est réalisée par le déplacement de la vis d'extrusion **19,** le canal reliant la sortie de l'accumulateur au bloc peut être sous la forme d'un tuyau flexible chauffant **23,24.** Ce type de tuyau est utilisé par exemple en co-extrusion pour relier une extrudeuse à un outillage. Les buses de dosage fonctionnant avec une pression peu élevée permettent d'utiliser ce type de liaison. Il peut y avoir autant de tuyaux **23,24** que de buses de dosage.

Cette configuration offre notamment les avantages suivants :

- la liaison flexible permet un réglage facile de la position du bloc **2.**
- Chauffage uniforme le long du tuyau, le corps de chauffe étant sur toute la circonférence.
- Meilleur écoulement de la matière, le tube interne pouvant être en PTFE, les coudes et changements de direction sont remplacés par des courbes.
- Les changements de matière ou de couleur sont facilités, pas de zone de stagnation.
- Réalisation simplifiée d'une distribution multiple sur plusieurs buses.
- Le changement d'outillage et la maintenance sont simplifiés.

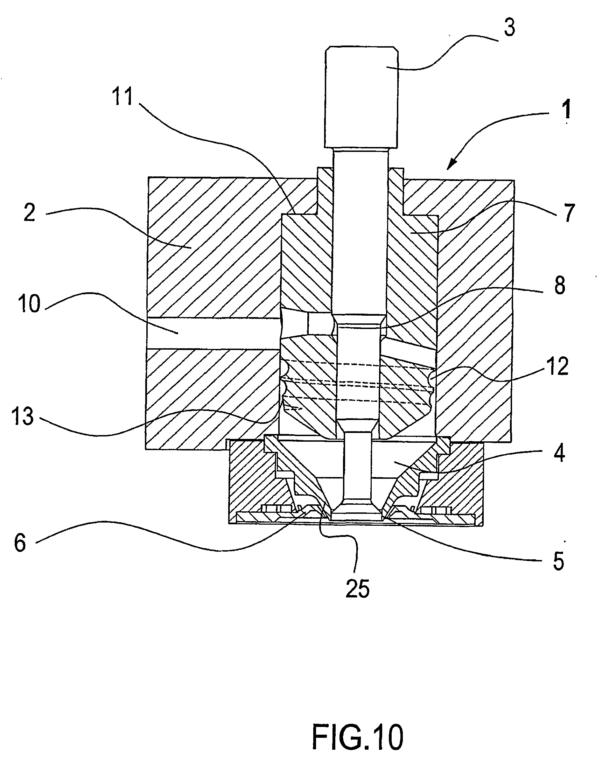

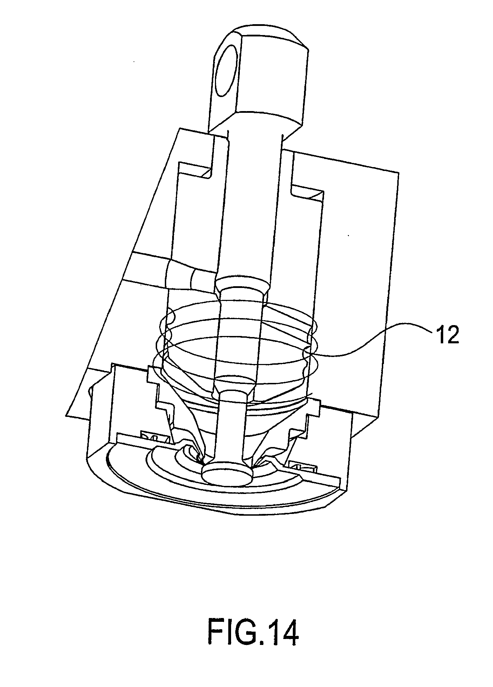

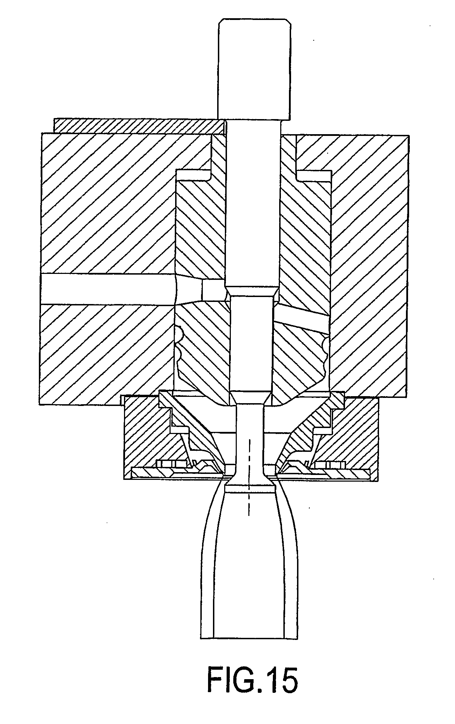

Les figures 10 à 15 décrivent un autre exemple de réalisation de l'invention.

Le piston comporte un passage **8** qui le traverse diamétralement et débouche dans une rainure hélicoïdale **12** de section arrondie et de profondeur décroissante. De plus cette rainure et réalisée sur la surface extérieure du piston **7** qui est conique **13.**

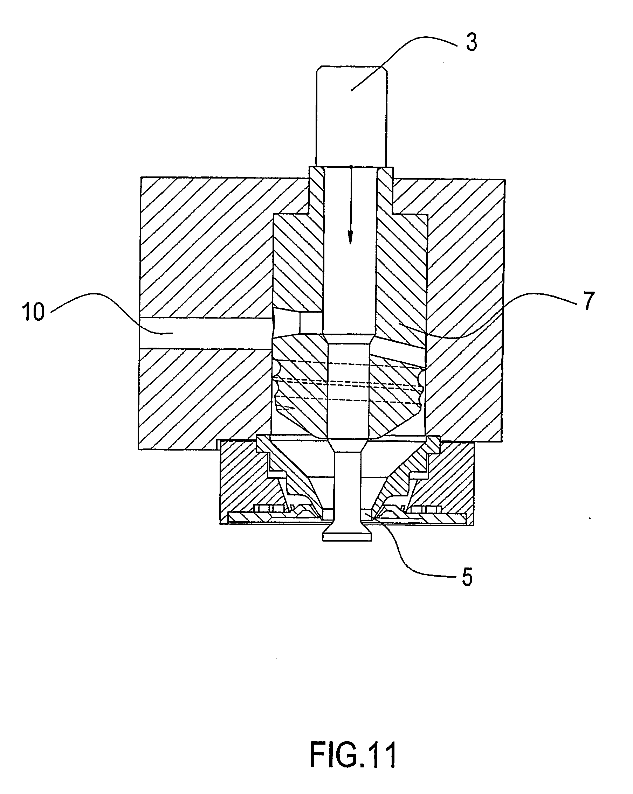

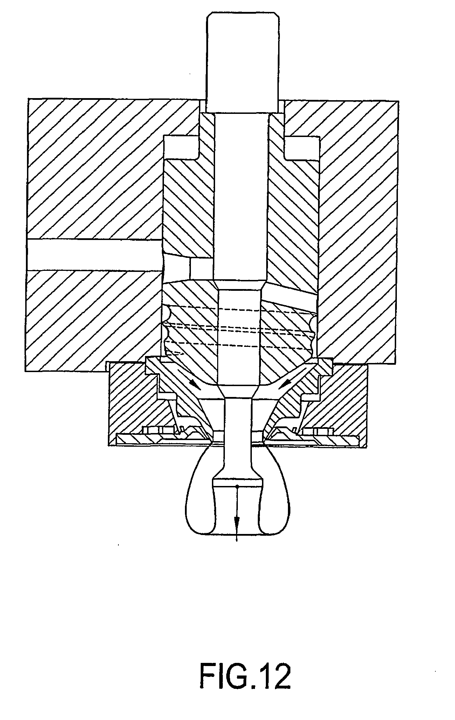

A l'intersection du passage **8,** la soupape **3** comporte une réduction de diamètre avec une transition conique. Le piston comporte la même forme en négatif. Cet arrangement réalise un obturateur. En position ouverte, (fig. 10,13,14,15) la matière peut passer dans un espace créé autour de la soupape et alimenter la rainure hélicoïdale **12** et la cavité de dosage **4.** En position fermée, (fig. 11,12) l'espace autour de la soupape disparaît et la matière ne peut pas passer. Cet espace autour de la soupape qui varie au cours du cycle est un avantage pour le changement de matière, en effet aucune stagnation n'est possible.

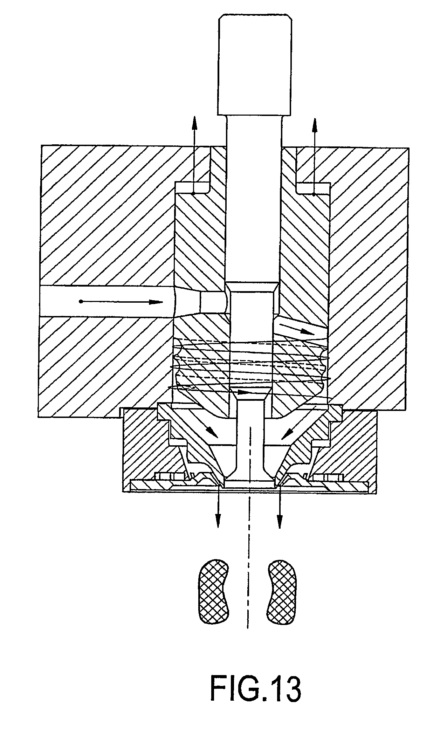

Lorsque la dose est formée et soufflée (fig. 13), la soupape **3** est en position haute, le passage 8 est ouvert et la matière alimente la cavité **4.** La matière sous pression s'écoule dans la rainure hélicoïdale **12** et fuit progressivement sur le cône du piston **7.** Le piston remonte simultanément vers la butée **11.** La matière se distribue de manière homogène sur la circonférence du piston et alimente la cavité **4** de l'extérieur vers le centre. Ce phénomène est important pour le renouvellement de la matière et évite les stagnations. La distribution concentrique de l'extérieur vers le centre balaye tout le volume de la cavité **4,** la grille n'est pas nécessaire (voir buse première variante). Dans cette variante le volume de la cavité **4** est plus petit, le contact piston / alésage du bloc **2** est réduit au regard de la rainure hélicoïdale. La force pour le déplacement du piston et réduite.

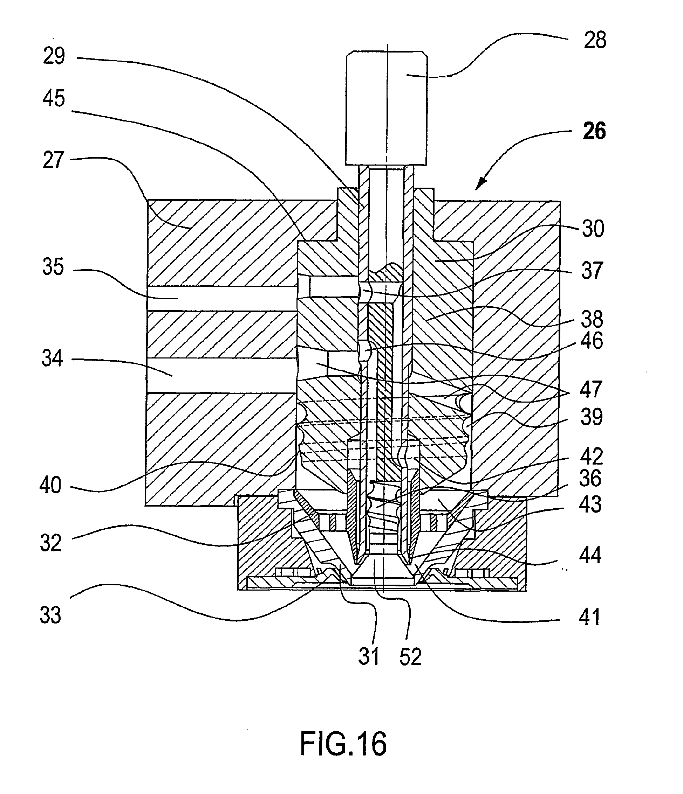

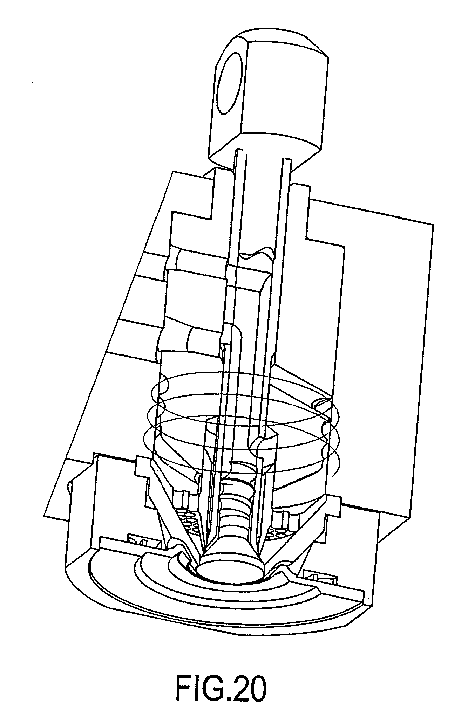

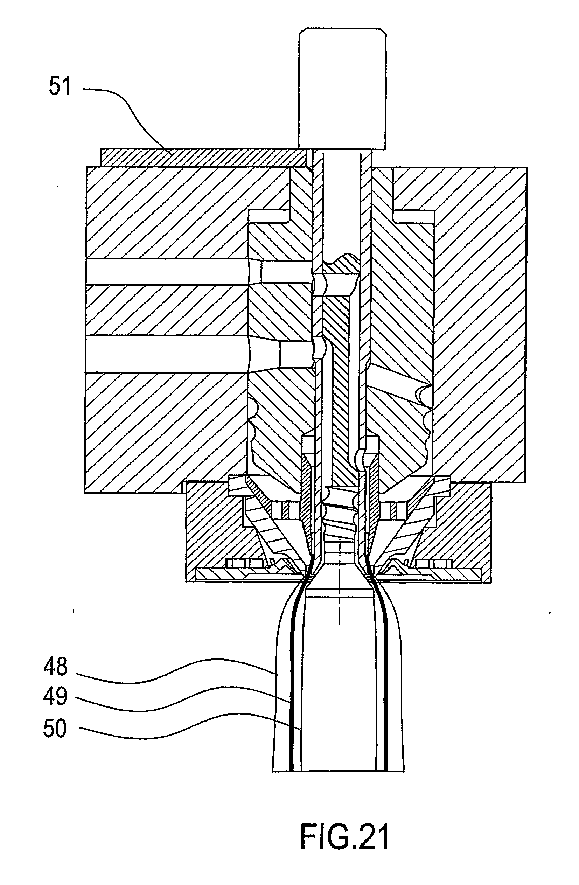

La buse de dosage volumétrique illustrée sur les figures 16 à 21 est basée sur un principe volumétrique similaire aux deux variantes précédemment énoncées. Elle permet de réaliser une dose annulaires multicouches (3 couches / 2 composants différents) . Ce système de dosage permet de réaliser des articles en matière plastique multicouches et plus particulièrement des épaules multicouches pour des tubes par ex. dentifrices ou cosmétiques. Ces composants peuvent se distinguer par des couleurs différentes ou il peut s'agir de polymères différents. Dans le cas précis des épaules de tubes, la couche médiane peut être une matière ayant des propriétés barrières aux gaz ou aux arômes.

La buse de dosage est alimentée par deux extrudeuses ayant chacune un système d'accumulateur de matière.

Le corps de soupape **28** et la douille pour soupape **29** sont assemblés par une liaison rigide (par exemple chassés ou goupillés) . La position angulaire du piston **38** dans le bloc **27** est fixe.

En position repos (fig. 16), le piston **38** est en position haute en butée **45** contre le bloc **27**.

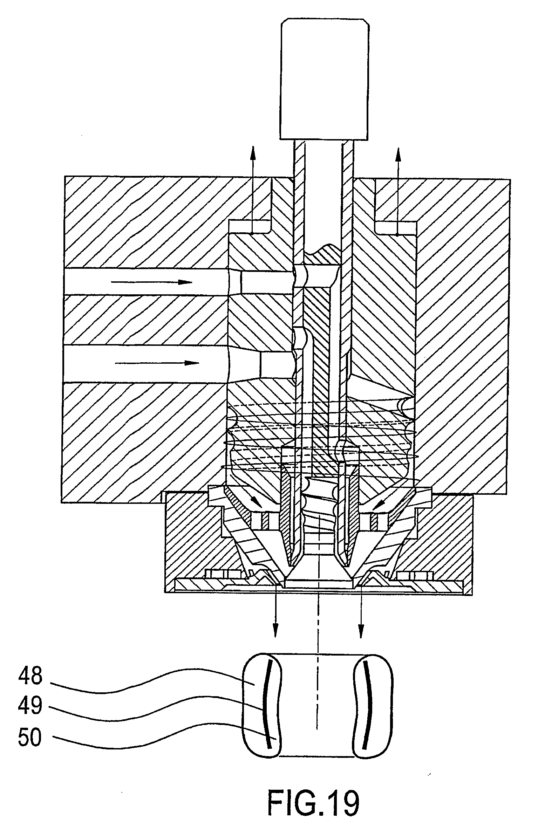

La dose est composée de 3 couches (fig. 19) :

- Couche externe **48** constituée de matière A
- Couche médiane **49** constituée de matière B
- Couche interne **50** constituée de matière A

La couche externe est réalisée par dosage « volumétrique », le volume de matière A est chassé de la cavité **43**. Le volume est défini par :

$$V_1 = \tfrac{\pi}{4}\left(D_3{}^2 - D_2{}^2\right) \times c$$

La couche médiane est réalisée par dosage « volumétrique », le volume de matière B est chassé de la cavité **42**. Le volume est défini par :

$$V_2 = \tfrac{\pi}{4}\left(D_2{}^2 - D_1{}^2\right) \times c$$

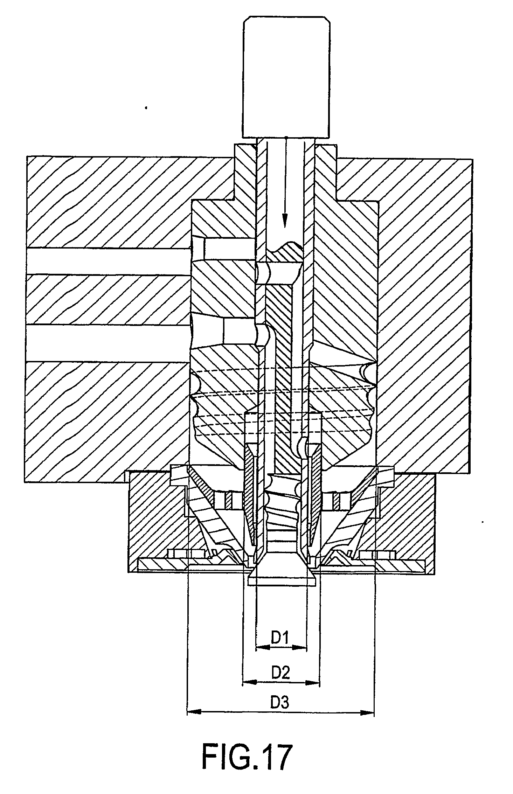

$D_1$, $D_2$ et $D_3$ sont des diamètres du piston. (fig. 17) et $c$ est la course du piston.

Le choix des diamètres permet de déterminer la proportion de V2 par rapport à V1 : par exemple on veut V2=10% de V1.

La couche interne est alimentée en direct (non volumétrique), pour ajuster le volume on joue sur la pression de la matière A et différents embouts de soupape **52** permettent de varier la section de passage de sortie en fonction de l'épaisseur de couche souhaitée.

Lors du cycle de dosage, la soupape **28** effectue une course linéaire engendrée par un actionneur (non illustré) dont la course est réglable (p.ex. vérin pneumatique).

Dans la situation illustrée à la figure 17, les passages du piston **47** et **37** se ferment et les orifices de sortie de matière **41** et **44** s'ouvrent. Les cavités **43** et **42** se retrouvent alors isolées des alimentations de matière **34** et **35** .

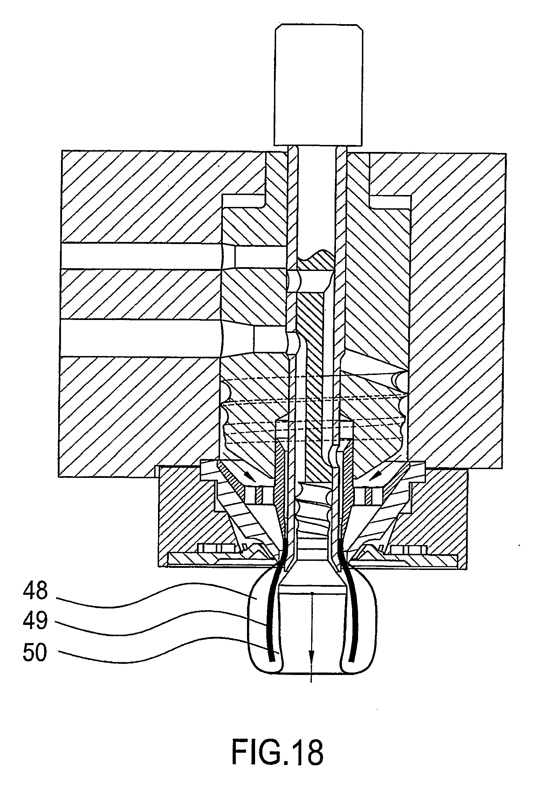

Dans la situation illustrée à la figure 18, la soupape **28** continue sa course et entraîne le piston **30** jusqu'à l'arrêt de l'actionneur. Le piston **30** chasse de la cavité **43** un volume de matière A ($V_1$) proportionnel à sa course, cette matière s'écoule à travers les trous de la grille **32** puis l'orifice de sortie de matière **41** pour former la couche externe de la dose (matière A) **48**. Simultanément le piston **30** chasse de la cavité **42** un volume de matière B ($V_2$) qui va former la couche médiane de la dose **49**. La couche interne **50** est formée par la matière A s'écoulant depuis le conduit **34** à travers le passage **46** et la rainure hélicoïdale **36**. La section de passage **41** étant nettement plus grande que **44**, la vitesse de sortie de la couche externe est supérieure à celle de la couche médiane et ceci à pour effet l'encapsulation de la couche médiane par la couche externe. Ce qui signifie que la couche médiane n'est pas apparente à l'extrémité de la dose.

L'actionneur entraîne ensuite la soupape **28** en sens inverse ce qui provoque la fermeture des orifices de sortie **41** et **44** et l'ouverture des passages **37** et **47** dans le piston **30** (Fig. 19). Simultanément à la fermeture de l'orifice de sortie, la dose de matière plastique est décollée par soufflage. Les matières sous pression dans les conduits d'arrivée de matière **34** et **35** traversent respectivement les passages **47** et **37** et repoussent le **piston 30** contre la butée **45,** ce qui a pour effet de remplir les cavités de dosage **43** et **42** et de remettre l'unité de dosage en position de repos telle qu'illustrée à la figure 16. La rainure hélicoïdale **39** de section arrondi combinée avec le cône **40** constitue un distributeur hélicoïdal tel que déjà décrit au chapitre *buse de dosage : variante.*

La pression de la matière dans le conduit d'arrivée de matière **34** doit être suffisante pour que le piston **30** soit remonté avant le prochain cycle de dosage. En variante l'orifice de sortie de la matière B **44** peut être conçu de manière à rester toujours ouvert.

**Revendications**

1. Unité de dosage (1,26) formant un bloc (2,27) comprenant un conduit d'arrivée de matière (10,34,35), une cavité de dosage (4,42,43) pouvant communiquer avec ledit conduit d'arrivée de matière (10,34,35), un orifice de sortie de matière (5,44) disposé sur une paroi de ladite cavité de dosage (4,42,43), une soupape (3,28,29,52) en forme de tige cylindrique adaptée pour coulisser à travers et obturer ledit orifice de sortie de matière (5,44); ladite unité de dosage (1,26) comprenant en outre un piston (7,30) monté coulissant co-axialement autour de la soupape (3,28,29,52) de manière à autoriser une variation du volume de la cavité de dosage (4,42,43); **caractérisée en ce que** la paroi latérale du piston (7,30) comporte au moins un passage traversant (8,47) adapté pour autoriser un acheminement de matière entre ledit conduit d'arrivée de matière (10,34,35) et l'intérieur du piston (7,30), ladite soupape étant adaptée pour fermer momentanément ledit passage traversant (8,47).

**2.** Unité de dosage selon la revendication 1 **caractérisée en ce que** la paroi inférieure du piston (7,30) comporte un alésage conique (13), la base du cône étant située du côté de la cavité de dosage (4).

**3.** Unité de dosage selon la revendication 1 ou 2 **caractérisée en ce que** la cavité de dosage (4,43) comporte une grille (9,32).

**4.** Unité de dosage selon la revendication 2 ou 3 **caractérisée en ce que** la soupape (3,28,29,52) comporte une rainure (12,36) en forme d'hélice, ladite rainure (12,36) étant dimensionnée pour autoriser l'écoulement de matière.

**5.** Unité de dosage selon la revendication précédente **caractérisée en ce que** la soupape (3,28) comporte une rainure de section arrondie composée de deux portions successives, soit une partie droite puis une hélice (12,36) à profondeur décroissante.

**6.** Unité de dosage selon l'une quelconque des revendications 1 à 5 **caractérisé en ce que** le piston (7,30) comporte une rainure (12,39) en forme d'hélice disposée sur sa face externe.

**7.** Unité de dosage selon la revendication précédente destinée pour la fabrication d'objets multicouches, ladite unité comprenant plusieurs conduits d'arrivée de matière (34,35) et un nombre correspondant de passages (47) dans le piston (30), la soupape (28) et le piston (30) comportant chacun une rainure (36,39).

**8.** Système de dosage de matière plastique comprenant une unité de dosage selon l'une quelconque des revendications précédentes et un accumulateur (15,16) comportant un conduit (17) disposé de manière à communiquer avec le conduit d'arrivée de matière (10,34,35), le conduit (17) de l'accumulateur (15,16) comportant une vis d'extrusion (19).

**9.** Système selon la revendication précédente comprenant des moyens pour déplacer axialement la vis d'extrusion (19) dans le conduit (17) de l'accumulateur (15,16).

**10.** Système selon la revendication 8 comprenant un piston de régulation (20) disposé de manière à se déplacer dans un cylindre disposé transversalement par rapport audit conduit (17) de l'accumulateur.

**11.** Méthode d'utilisation d'une unité de dosage telle que définie dans l'une quelconque des revendications 1 à 8 **caractérisée en ce que** l'on effectue successivement les étapes suivantes :

- Ouverture de l'orifice de sortie matière (5,44) par abaissement de la soupape (3,28,29,52) qui simultanément ferme le passage traversant (8,47),
- Abaissement du piston (7,30) et extraction d'une dose de matière plastique à travers l'orifice de sortie de matière (5,44),
- Fermeture de l'orifice de sortie de matière (5,44) par élévation de la soupape (3,28,29,52) qui simultanément ouvre le passage traversant (8,47),
- Retour du piston (7,30) dans sa position initiale par l'arrivée de matière sous pression dans le passage traversant (8,47) et remplissage de la cavité de dosage (4,42,43).

**Patentansprüche**

**1.** Dosiereinheit (1, 26), die einen Block (2, 27) bildet, der eine Materialzuführleitung (10, 34, 35), einen Dosierhohlraum (4, 42, 43), der mit der Materialzuführleitung (10, 34, 35) in Verbindung stehen kann, eine Materialausgangsöffnung (5, 44), die auf einer Wand des Dosierhohlraums (4, 42, 43) angeordnet ist, ein Ventil (3, 28, 29, 52) in Form eines zylindrischen Schafts, der angepasst ist, um durch die Werkstoffausgangsöffnung (5, 44) zu gleiten und diese zu verschließen, aufweist, wobei die Dosiereinheit (1, 26) außerdem einen Kolben (7, 30) aufweist, der koaxial um das Ventil (3, 28, 29, 52) derart gleitend montiert ist, dass er eine Variation des Volumens des Dosierhohlraums (4, 42, 43) gestattet,
**dadurch gekennzeichnet, dass** die Seitenwand des Kolbens (7, 30) mindestens eine durchgehende Passage (8, 47) aufweist, die angepasst ist, um ein Befördern von Material zwischen der Materialzuführleitung (10, 34, 35) und dem Inneren des Kolbens (7, 30) zu gestatten, wobei das Ventil angepasst ist, um die durchgehende Passage (8, 47) vorübergehend zu schließen.

**2.** Dosiereinheit nach Anspruch 1, **dadurch gekennzeichnet, dass** die untere Wand des Kolbens (7, 30) eine kegelförmige Bohrung (13) aufweist, wobei die Basis des Kegels auf der Seite des Dosierhohlraums (4) liegt.

**3.** Dosiereinheit nach Anspruch 1 oder 2, **dadurch gekennzeichnet, dass** der Dosierhohlraum (4, 43) ein Gitter (9, 32) aufweist.

**4.** Dosiereinheit nach Anspruch 2 oder 3, **dadurch gekennzeichnet, dass** das Ventil (3, 28, 29, 52) eine Rille (12, 36) in Schraubenform aufweist, wobei die Rille (12, 36) bemessen ist, um das Fließen von Material zu gestatten.

5. Dosiereinheit nach dem vorhergehenden Anspruch, **dadurch gekennzeichnet, dass** das Ventil (3, 28) eine Rille mit gerundetem Querschnitt aufweist, die aus zwei aufeinanderfolgenden Abschnitten besteht, nämlich aus einem geradlinigen Teil und dann einer Schraube (12, 36) mit abnehmender Tiefe.

6. Dosiereinheit nach einem der Ansprüche 1 bis 5, **dadurch gekennzeichnet, dass** der Kolben (7, 30) eine Rille (12, 39) in Schraubenform aufweist, die auf seiner Außenseite angeordnet ist.

7. Dosiereinheit nach dem vorhergehenden Anspruch, die zum Herstellen von mehrschichtigen Objekten bestimmt ist, wobei die Einheit mehrere Materialzuführleitungen (34, 35) und eine entsprechende Anzahl Durchgänge (47) in dem Kolben (30) aufweist, wobei das Ventil (28) und der Kolben (30) jeweils eine Rille (36, 39) aufweisen.

8. Kunststoffmaterialdosiersystem, das eine Dosiereinheit nach einem der vorhergehenden Ansprüche und einen Speicher (15, 16) aufweist, der eine Leitung (17) aufweist, die derart angeordnet ist, dass sie mit der Materialzuführleitung (10, 34, 35) in Verbindung steht, wobei die Leitung (17) des Speichers (15, 16) eine Extruderschnecke (19) aufweist.

9. System nach dem vorhergehenden Anspruch, das Mittel zum axialen Verlagern der Extruderschnecke (19) in der Leitung (17) des Speichers (15, 16) aufweist.

10. System nach Anspruch 8, das einen Regulierkolben (20) aufweist, der derart angeordnet ist, dass er sich in einem Zylinder bewegt, der quer zu der Leitung (17) des Speichers angeordnet ist.

11. Gebrauchsverfahren für eine Dosiereinheit wie in einem der Ansprüche 1 bis 8 definiert, **dadurch gekennzeichnet, dass** man nacheinander die folgenden Schritte ausführt:

    - Öffnen der Materialausgangsöffnung (5, 44) durch Senken des Ventils (3, 28, 29, 52), das gleichzeitig die durchgehende Passage (8, 47) schließt,
    - Senken des Kolbens (7, 30) und Extraktion einer Kunststoffmaterialdosis durch die Materialausgangsöffnung (5, 44),
    - Schließen der Materialausgangsöffnung (5, 44) durch Heben des Ventils (3, 28, 29, 52), das gleichzeitig die durchgehende Passage (8, 47) öffnet,
    - Rückkehr des Kolbens (7, 30) in seine ursprüngliche Position durch Ankommen von Material unter Druck in der durchgehenden Passage (8, 47) und Füllen des Dosierhohlraums (4, 42, 43).

## Claims

1. Metering unit (1, 26) forming a block (2, 27) comprising a material inlet duct (10, 34, 35), a metering cavity (4, 42, 43) that can communicate with said material inlet duct (10, 34, 35), a material outlet orifice (5, 44) arranged on a wall of said metering cavity (4, 42, 43), a valve (3, 28, 29, 52) in the form of a cylindrical rod suitable for sliding through and blocking said material outlet orifice (5, 44); said metering unit (1, 26) also comprising a piston (7, 30) mounted to slide coaxially around the valve (3, 28, 29, 52) so as to allow a variation of the volume of the metering cavity (4, 42, 43); **characterized in that** the lateral wall of the piston (7, 30) comprises at least one through passage (8, 47) suitable for allowing a routing of material between said material intake duct (10, 34, 35) and the inside of the piston (7, 30), said valve being suitable for temporarily closing said through passage (8, 47).

2. Metering unit according to Claim 1, **characterized in that** the bottom wall of the piston (7, 30) comprises a tapered bore (13), the base of the cone being situated on the side of the metering cavity (4).

3. Metering unit according to Claim 1 or 2, **characterized in that** the metering cavity (4, 43) comprises a grid (9, 32).

4. Metering unit according to Claim 2 or 3, **characterized in that** the valve (3, 28, 29, 52) comprises a helical groove (12, 36), said groove (12, 36) being dimensioned to allow the flow of material.

5. Metering unit according to the preceding claim, **characterized in that** the valve (3, 28) comprises a groove of rounded section made up of two consecutive portions, namely a straight portion followed by a helix (12, 36) of decreasing depth.

6. Metering unit according to any one of Claims 1 to 5, **characterized in that** the piston (7, 30) comprises a helical groove (12, 39) arranged on its outer face.

7. Metering unit according to the preceding claim, intended for the manufacture of multilayer objects, said unit comprising a plurality of material inlet ducts (34, 35) and a corresponding number of passages (47) in the piston (30), the valve (28) and the piston (30) each comprising a groove (36, 39).

**8.** Plastic material metering system comprising a metering unit according to any one of the preceding claims and an accumulator (15, 16) comprising a duct (17) arranged in such a way as to communicate with the material inlet duct (10, 34, 35), the duct (17) of the accumulator (15, 16) comprising an extrusion screw (19).

**9.** System according to the preceding claim, comprising means for axially displacing the extrusion screw (19) in the duct (17) of the accumulator (15, 16).

**10.** System according to Claim 8, comprising a regulating piston (20) arranged in such a way as to be displaced in a cylinder arranged transversally relative to said duct (17) of the accumulator.

**11.** Method for using a metering unit as defined in any one of Claims 1 to 8, **characterized in that** the following steps are performed in succession:

    - opening of the material outlet orifice (5, 44) by lowering of the valve (3, 28, 29, 52) which simultaneously closes the through passage (8, 47),
    - lowering of the piston (7, 30) and extraction of a metered amount of plastic material through the material outlet orifice (5, 44),
    - closure of the material outlet orifice (5, 44) by raising of the valve (3, 28, 29, 52) which simultaneously opens the through passage (8, 47),
    - return of the piston (7, 30) to its initial position by the arrival of material under pressure in the through passage (8, 47) and filling of the metering cavity (4, 42, 43).

**FIG.1**

**FIG.2**

FIG.3

FIG.4

FIG.5

FIG.6

FIG.7

FIG.8

FIG.9

FIG.10

FIG.11

FIG.12

FIG.13

FIG.14

FIG.15

FIG.16

FIG.17

48
49
50

FIG.18

48
49
50

FIG.19

FIG.20

51

48
49
50

FIG.21

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4943405 A, AISA
- US 4352775 A, Karl Mägerle
- WO 03047823 A, SACMI
- US 6045736 A, AISA
- JP 0740400 A